# EUROPÄISCHE PATENTSCHRIFT

(11) **EP 2 179 923 B1**
(45) Veröffentlichungstag und Bekanntmachung des Hinweises auf die Patenterteilung: **08.01.2020**
(21) Anmeldenummer: 09013468.5
(22) Anmeldetag: 26.10.2009
(51) Int. Cl.: B64D 11/02, A47K 3/30

(54) **Modulare Duschkabine für Flugzeuge**
Modular shower cabin for airplanes
Cabine de couche modulaire pour avions

(30) Priorität: 27.10.2008 DE 102008053228
(43) Veröffentlichungstag der Anmeldung: 28.04.2010
(60) Teilanmeldung: 19174079.4
(73) Patentinhaber: Lufthansa Technik AG, 22335 Hamburg (DE)
(72) Erfinder: Von Obstfelder, Nico, 20253 Hamburg (DE)
(74) Vertreter: Müller Verweyen

(56) Entgegenhaltungen:
- EP-A2- 1 338 508
- DE-A1-102006 042 300
- DE-A1-102007 009 755
- DE-U1- 20 004 353
- US-A- 4 970 734
- US-A1- 2003 188 378

## Beschreibung

Die Erfindung betrifft eine modulare Duschkabine für Flugzeuge mit den Merkmalen des Oberbegriffs von Anspruch 1. Eine solche Duschkabine ist beispielsweise aus der Offenlegungsschrift DE 10 2006 042 300 A1 bekannt.

In Flugzeugen werden Duschkabinen z.B. als Sonderausstattungen oder auch im Firstclass Bereich vorgesehen, wobei diese dann sowohl optisch als auch haptisch höchsten in dieser Klasse üblichen Qualitätsansprüchen genügen müssen. Ferner müssen diese Duschkabinen eine bestimmte technische Ausstattung, wie z.B. Beleuchtung, Armaturen, Wasserablauf, Entlüftung, Sauerstoffmasken, aufweisen, welche möglichst vormontiert mit der Duschkabine im Flugzeug verbaut werden, um den erforderlichen Zeitaufwand bei der erstmaligen Montage im Flugzeug zu reduzieren. Da der zur Verfügung stehende Platz im Flugzeug begrenzt ist, sollte die Duschkabine selbst und die Anordnung der Anschlüsse sowie der technischen Ausstattungsteile unter dem Gesichtspunkt des minimalen Platzbedarfes ausgelegt werden. Ferner sollte der Zeitaufwand bei möglichen nachfolgenden Reparaturen möglichst gering sein. Weiterhin müssen die Duschkabinen in Flugzeugen aus Sicherheitsgründen bestimmte vorgegebene Feuerwiderstandseigenschaften besitzen und gleichzeitig optisch hochwertig lackierbar sein.

Bisherige Duschkabinen sind zweiteilig aus einem oberen und einem unteren Segment gebildet, die über eine horizontale Nahtstelle miteinander verbunden sind. In dem unteren Segment ist als integraler Bestandteil der Wasserablauf vorgesehen, während in dem oberen Segment weitere technische Einrichtungen, wie z.B. die Entlüftung, die Beleuchtung, ein Überkopfduschkopf oder dergleichen, angeordnet sind. An einer Seite des oberen Segmentes ist zusätzlich ein Ausschnitt vorgesehen, in dem eine Armatureneinheit angeschlossen ist. Der Einstiegsbereich ist gebildet aus zwei in den Segmenten vorgesehenen Teilausschnitten, die sich beim Zusammenfügen der Segmente zu einem großen Ausschnitt ergänzen.

Nachteilig ist bei dieser Ausführungsform, dass beim Zusammenfügen des oberen und des unteren Segmentes sehr genau gearbeitet werden muss, damit die Trennfuge möglichst nicht sichtbar oder wenigstens gleichmäßig verläuft, so dass der harmonische Gesamteindruck durch die Trennfuge möglichst nicht gestört wird, und der beim Zusammenfügen der Segmente entstehende große Ausschnitt des Einstiegsbereiches möglichst formgetreu ist. Ferner ist die Anordnung der Armatureneinheit durch die Lage der Trennfuge vorbestimmt, soweit die Ausnehmung zur Anordnung der Armaturenbox aus Qualitätsgründen ausschließlich in einem der Segmente vorgesehen sein soll. Ferner ist es durch die Integration der technischen Einrichtungen in die Segmente nicht möglich, diese im Reparaturfall einzeln auszutauschen, da diese von dem Innenraum der Duschkabine nur schwer zugänglich sind. Im Extremfall muss zur Reparatur einer der technischen Einrichtungen die gesamte Duschkabine ausgebaut werden, was mit hohem Aufwand und Kosten verbunden ist.

Aufgabe der Erfindung ist es, eine Duschkabine für Flugzeuge unter Vermeidung der oben genannten Nachteile zu schaffen.

Die Lösung der Aufgabe erfolgt erfindungsgemäß durch eine modulare Duschkabine mit den Merkmalen von Anspruch 1. Weitere vorteilhafte Weiterbildungen sind in den Unteransprüchen angegeben.

Zur Lösung der Aufgabe wird eine modulare Duschkabine für Flugzeuge mit einer integrierbaren Armatureneinheit und integrierten technischen Einrichtungen, wie z.B. einem Wasserablauf, einer Beleuchtung, einer Entlüftungsvorrichtung, Sauerstoffmasken oder dergleichen, vorgeschlagen, welche ein Mittelteil aufweist, in dem ein durch einen Ausschnitt gebildeter Einstiegsbereich und eine Aufnahme für die Armatureneinheit vorgesehen ist, und ein sich oben an das Mittelteil anschließendes Deckenteil und ein sich unten an das Mittelteil anschließendes Bodenteil aufweist, und in welcher die technischen Einrichtungen dem Deckenteil und/oder dem Bodenteil zugeordnet sind.

Der Grundgedanke der Erfindung ist darin zu sehen, dass in Abkehr von der im Stand der Technik bekannten zweiteiligen Lösung nunmehr ein dreiteiliger Aufbau mit einem Mittelteil, einem sich oben anschließenden Deckenteil und einem sich unten anschließenden Bodenteil vorgeschlagen wird, wobei die technischen Einrichtungen eben dem leichter zugänglichen und/oder zu demontierenden Deckenteil und/oder Bodenteil zugeordnet sind. Ferner ist der Einstiegsbereich durch einen einzigen in dem Mittelteil angeordneten Ausschnitt gebildet, so dass dieser mit einer hohen Formgenauigkeit ohne die Berücksichtigung einer Trennfuge hergestellt werden kann. Da der Einstiegsbereich selbst wesentlich formgenauer hergestellt werden kann, kann eine üblicherweise in dem Einstiegsbereich vorgesehene Tür wesentlich besser gedichtet werden und eine möglicherweise vorgesehene Verkleidung wesentlich passgenauer montiert werden. Außerdem weist die Duschkabine durch den vorgeschlagenen dreiteiligen Grundaufbau keine störende, im sichtbaren Bereich liegende, horizontal verlaufende Trennfuge mehr auf, so dass der optische Gesamteindruck dadurch wesentlich verbessert wird. Unter sichtbarem Bereich soll hier das im Blickfeld des Betrachters liegende Mittelteil verstanden werden, so dass selbstverständlich am oberen und/oder unteren Rand der Duschkabine eine Trennfuge zwischen dem Mittelteil und dem Boden- oder Deckenteil vorgesehen werden kann, ohne dass dadurch der Erfindungsgedanke verlassen wird. Bedarfsweise können die Trennfugen zwischen dem Mittelteil und dem Deckenteil und dem Bodenteil aber auch sehr einfach dadurch versteckt werden, indem das Mittelteil das Deckenteil und das Bodenteil außenseitig umfasst. Ein weiterer Vorteil der Erfindung besteht darin, dass die Aufnahme für die Armatureneinheit in beliebiger Höhe, insbesondere in der standardisierten Türgriffhöhe im Flugzeugbau, in dem Mittelteil angeordnet werden kann, ohne dass hierbei auf die bisher vorhandene horizontale Trennfuge Rücksicht genommen werden muss.

Erfindungsgemäß wird vorgeschlagen, dass das Mittelteil durch wenigstens zwei Strukturbauteile gebildet ist, und die Strukturbauteile an ihren vertikal verlaufenden Seiten miteinander verbunden sind. Dadurch kann das Mittelteil in verschiedenen Querschnittsgeometrien, z.B. als Tonne mit einem kreisrunden Querschnitt, als Quader mit rechteckigem Querschnitt, oder mit beliebigen Radien in Anpassung an die Einbauverhältnisse in der Flugzeugkabine ausgebildet werden. Wichtig ist dabei, dass die Trennfugen vertikal verlaufen oder in Form von vertikal verlaufenden Kanten versteckt angeordnet sind und dadurch die Ausschnitte nicht schneiden.

Ferner wird erfindungsgemäß vorgeschlagen, dass wenigstens eines der Strukturbauteile einen Radius aufweist, und das Strukturbauteil im Anschluss an den Radius in eine flache Seitenwand übergeht. Da die Duschkabine in häufigen Fällen angrenzend zu winklig, insbesondere rechtwinklig, zueinander angeordneten Seitenwänden einer Flugzeugkabine angeordnet wird, wird durch den Radius ein Freiraum zwischen der Duschkabine und den aneinander angrenzenden Seitenwänden geschaffen, in dem die Armatureneinheit von außen an die Duschkabine angesetzt werden kann, während die Duschkabine mit der flachen Seitenwand dann an der Seitenwand der Flugzeugkabine anliegt.

In diesem Fall ist es von besonderem Vorteil, wenn wenigstens zwei Strukturbauteile mit einem identischen Radius vorgesehen sind, und die Strukturbauteile derart zusammengefügt sind, dass die gegenüberliegenden flachen Seitenwände parallel zueinander angeordnet sind. In diesem Fall können in der Grundform identische Strukturbauteile verwendet werden, die in einer gemeinsamen Form oder Herstellungsverfahren gefertigt werden können. Durch die Verwendung einer gemeinsamen Form zur Herstellung der Strukturbauteile werden die Fertigungskosten für die Duschkabine deutlich gesenkt.

Die Formgebung der Duschkabine kann an die zur Verfügung stehenden Einbauverhältnisse in der Flugzeugkabine besonders einfach dadurch angepasst werden, indem die aneinander angrenzenden flachen Seitenwände unterschiedlich breit sind. Insbesondere können die Strukturbauteile dann zunächst mit einem Übermaß gefertigt werden und anschließend durch einen individuellen Zuschnitt der flachen Seitenwände an die jeweiligen Einbauverhältnisse angepasst werden. Die einzige nicht veränderbare Geometrie ist dabei der Radius, an dem die Armatureneinheit angeschlossen wird.

Weiterhin wird vorgeschlagen, dass zwischen dem Mittelteil und dem Deckenteil wenigstens ein Entlüftungsspalt vorgesehen ist. Der Entlüftungsspalt kann dabei durch die geometrische Ausbildung der Außenkontur des Deckenteils oder die geometrische Ausbildung der Innenkontur des Mittelteils verwirklicht sein, so dass sich dieser beim Zusammenfügen der Teile automatisch ergibt. Insbesondere kann der Querschnitt des Entlüftungsspaltes unabhängig von anderen Bauteilen so gewählt werden, dass die in der Duschkabine vorhandene feuchte Luft ausreichend und geräuschlos abgesaugt werden kann.

Eine weitere bevorzugte Ausbildung der Erfindung ist darin zu sehen, dass das Bodenteil und/oder das Deckenteil zum Innenraum der Duschkabine durch eine lösbare Abdeckplatte abgedeckt sind. Damit werden die technischen Einrichtungen zum einen optisch versteckt und sind gleichzeitig zur Reparatur durch Entfernen der Abdeckplatte leicht zugänglich.

In diesem Fall ist eine besonders montage- und reparaturfreundliche Befestigung der Abdeckplatte darin zu sehen, indem diese magnetisch befestigt ist. Die magnetische Befestigung erlaubt eine Montage und Demontage der Abdeckplatte ohne die Verwendung von Werkzeugen und erfordert keine vom Innenraum der Duschkabine sichtbaren bzw. zu verdeckenden Befestigungsmittel. Die magnetische Befestigung kann z.B. durch an der Abdeckplatte und/oder an dem Bodenteil oder dem Deckenteil angeordnete Magnetstreifen erreicht werden, die z.B. formschlüssig oder durch eine Klebeverbindung befestigt sind.

Ferner wird vorgeschlagen, dass zwischen der Abdeckplatte und dem Bodenteil Abstützelemente vorgesehen sind, durch die die Abdeckplatte von dem Bodenteil in einem Abstand gehalten ist. Durch die vorgeschlagenen Abstützelemente wird einerseits die Abdeckplatte unterstützt und andererseits verhindert, dass die in dem Bodenteil angeordneten technischen Einrichtungen beim Begehen der Duschkabine belastet werden.

Weiter wird vorgeschlagen, dass zwischen der oder den Abdeckplatte/n und dem Mittelteil ein Wasserablaufspalt oder ein Entlüftungsspalt vorgesehen ist. Der Wasserablaufspalt oder Entlüftungsspalt kann durch einfache geometrische Ausbildung der Abdeckplatte bzw. des Mittelteils im angrenzenden Bereich geschaffen werden, wobei das Wasser sehr einfach unter Ausnutzung der durch die Abstützelemente geschaffenen Hohlräume abgeführt werden kann.

Im Folgenden wird die Erfindung anhand mehrer bevorzugter Ausführungsbeispiele näher erläutert. In den Figuren sind im Einzelnen zu erkennen:
- Fig.1:: Modulare Duschkabine mit tonnenförmigem Mittelteil
- Fig.2:: Modulare Duschkabine mit im Querschnitt zitronenförmigem Mittelteil
- Fig.3:: Modulare Duschkabine mit unterschiedlich breiten flachen Seitenwänden und zwei identischen Radien
- Fig.4: Modulare Duschkabine mit zwei flachen Seitenwänden und einer Seitenwand mit Radius
- Fig.5:: Modulare Duschkabine aus Fig.4 in Sicht von unten
- Fig.6:: Modulare Duschkabine aus Fig.1 in Sicht von unten

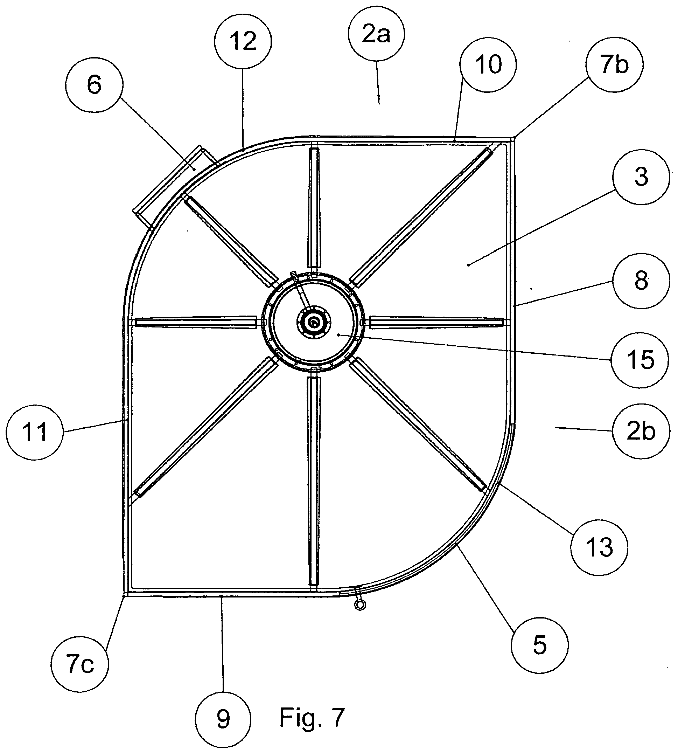

- Fig.7:: Modulare Duschkabine aus Fig.3 in Sicht von unten
- Fig.8:: Modulare Duschkabine aus Fig.2 in Sicht von unten
- Fig.9:: Modulare Duschkabine mit zitronenförmigem Querschnitt in Explosionsdarstellung
- Fig.10:: Modulare Duschkabine mit Sitzgelegenheit
- Fig.11:: Bodenteil mit Abstützelementen ohne Abdeckplatte
- Fig.12:: Ausschnitt des Bodenteils mit Abdeckplatte

Bei der nachstehenden Beschreibung der modularen Duschkabinen beziehen sich die Orts- und Richtungsangaben immer auf eine Duschkabine im stehenden Zustand.

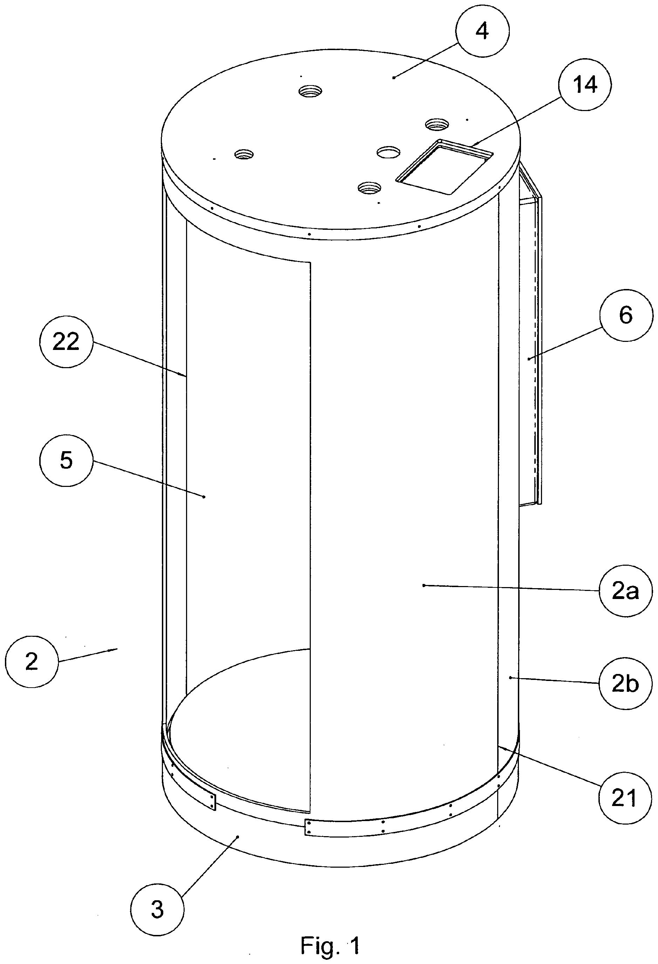

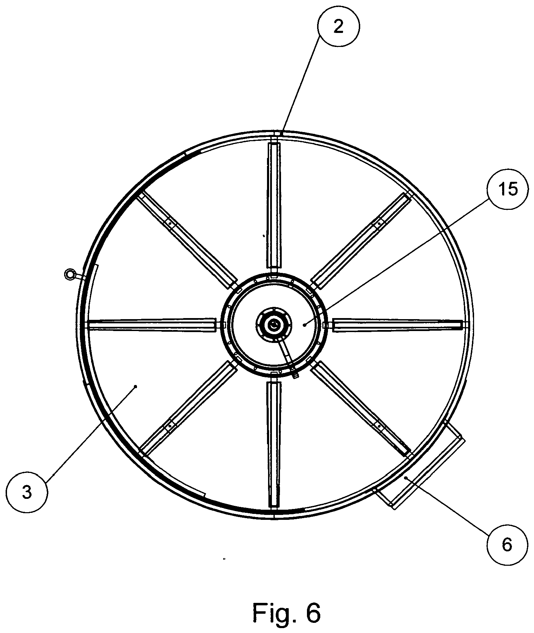

In Fig.1 ist zunächst eine modulare Duschkabine mit einem tonnenförmigen Mittelteil 2 zu erkennen. Das tonnenförmige Mittelteil 2 ist nach oben durch das Deckenteil 4 und nach unten durch das Bodenteil 3 begrenzt und durch zwei zusammengefügte Strukturbauteile 2a und 2b gebildet. Die Strukturbauteile 2a und 2b sind teilkreisförmig ausgebildet und an ihren vertikalen Seitenrändern 21 und 22 zusammengefügt, so dass sich im Querschnitt, wie auch in Figur 6 in Blickrichtung von unten auf das Bodenteil 3 mit dem mittig angeordneten Ablauf 15 zu erkennen ist, ein Vollkreis ergibt. In dem Strukturbauteil 2a ist ein Ausschnitt 5 vorgesehen, der den Einstiegsbereich darstellt und aufgrund der erfindungsgemäßen Ausbildung der Duschkabine nunmehr ausschließlich in dem Strukturbauteil 2a vorgesehen ist. Die Formgebung des Ausschnittes 5 ist dadurch nicht durch Nahtstellen gestört und kann in einem einzigen Herstellungsschritt erfolgen. An dem Strukturbauteil 2b ist seitlich eine Aufnahme 6 für eine Armatureneinheit vorgesehen, deren Platzierung in der Höhe aufgrund der entfallenden Nahtstelle nunmehr frei gewählt werden kann. Die Armatureneinheit kann dann je nach Reihenfolge im Flugzeug oder auch während der Vormontage in der Aufnahme 6 befestigt werden.

In dem Deckenteil 4 ist ein Durchbruch 14 vorgesehen, in dem eine technische Einrichtung, wie z.B. eine Beleuchtung, eine Entlüftung, ein Überkopfduschkopf oder dergleichen, angeordnet werden kann. Unter technischen Einrichtungen sollen hier alle erforderlichen Einrichtungen verstanden werden, die für die Verwendung der Duschkabine im Flugzeug, insbesondere in der Luxusklasse, wünschenswert oder erforderlich sind.

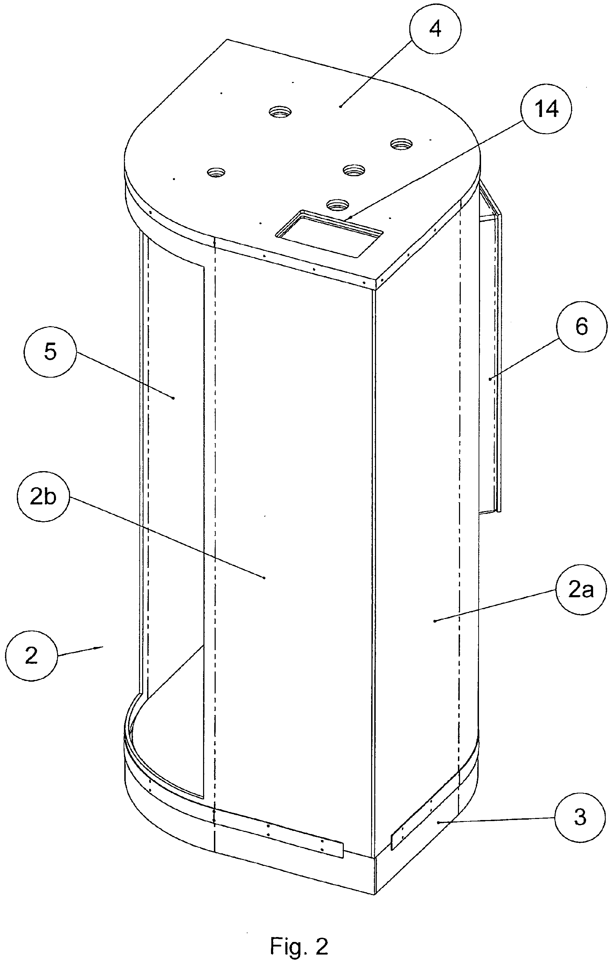

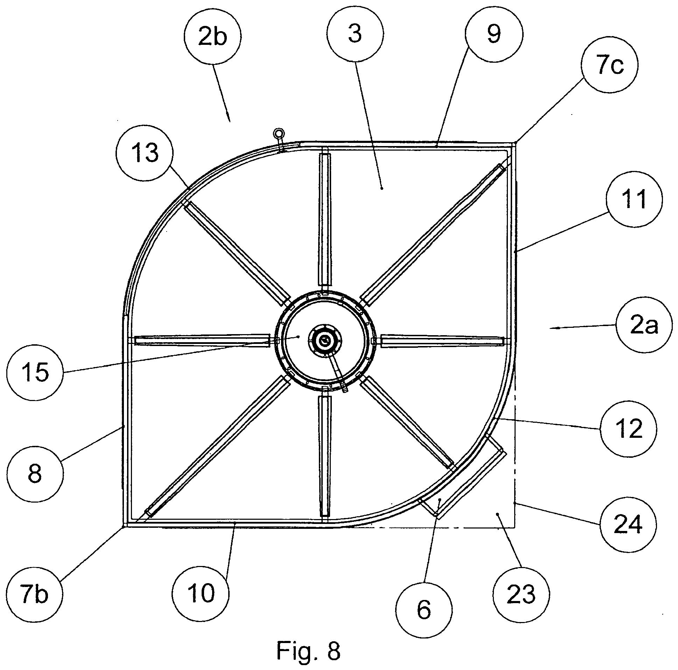

In der Fig.2 ist eine modulare Duschkabine mit einem im Querschnitt zitronenförmigen Mittelteil 2 zu erkennen. Das Mittelteil 2 ist ebenfalls aus zwei Strukturbauteilen 2a und 2b gebildet, die an ihren vertikal verlaufenden Seitenrändern in den Kanten 7b und 7c, wie in Fig.8 zu erkennen ist, verbunden sind. An der Oberseite des Mittelteils 2 ist ein Deckenteil 4 und an der Unterseite ein Bodenteil 3 vorgesehen. Die Strukturbauteile 2a und 2b besitzen eine identische Grundform und sind jeweils aus einem Radius 12 und 13 und an den Radius 12 und 13 sich anschließende flache Seitenwände 8,9,10 und 11 gebildet. Im Bereich des Radius 13 ist eine Ausnehmung 5 vorgesehen, die den Einstiegsbereich darstellt, und aufgrund des Radius einen Einstieg von verschiedenen Richtungen in die Duschkabine ermöglicht. An dem Radius 12 ist die Aufnahme 6 für die Armatureneinheit angeordnet, welche bei Anordnung der Duschkabine in einer Ecke 24 der Flugzeugkabine in den durch den Radius 12 geschaffenen Freiraum 23 ragt. Die flachen Seitenwände 10 und 11 liegen dann spaltfrei an den Wänden der Flugzeugkabine an, ohne durch die Aufnahme 6 gestört zu werden. Die Strukturbauteile 2a und 2b sind dabei derart ausgerichtet und bemessen, dass die gegenüberliegenden flachen Seitenwände 8 und 11 und 9 und 10 parallel zueinander verlaufen und die gleiche Breite aufweisen.

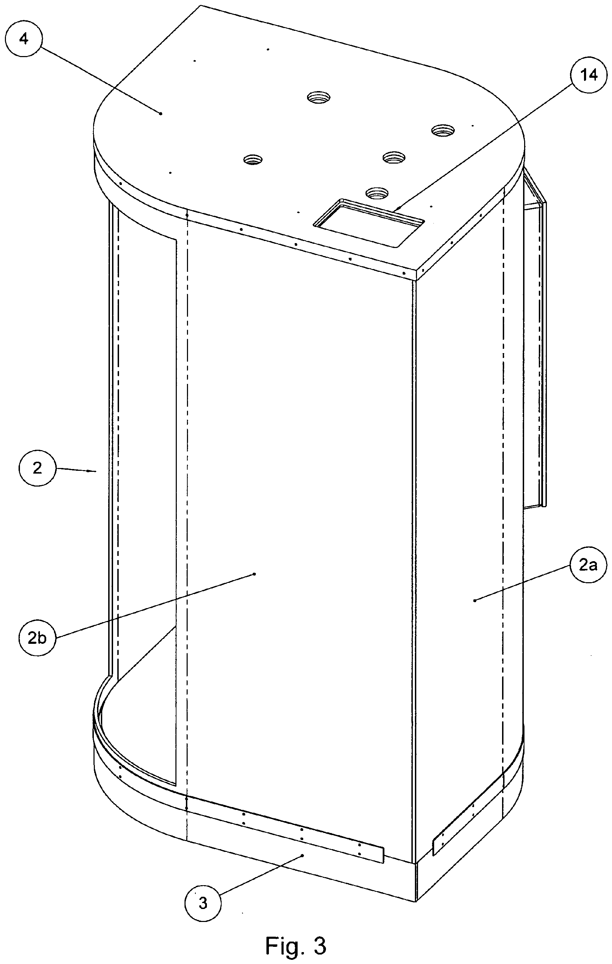

In Fig.3 ist eine weitere Form der modularen Duschkabine dargestellt, bei der das Mittelteil 2 wiederum durch zwei Strukturbauteile 2a und 2b gebildet ist, die jeweils einen identischen Radius 12 und 13 und flache Seitenwände 8,9,10, und 11 aufweisen. Im Unterschied zu der Ausführungsform aus Fig.2 sind hier jedoch die flachen Seitenwände 8 und 9 des Strukturbauteiles 2b und die flachen Seitenwände 10 und 11 des Strukturbauteils 2a unterschiedlich lang gewählt.

Insgesamt ergibt sich dadurch in den Ausführungsbeispielen der Fig.2 und 3 ein quadratischer oder rechteckiger Grundriss, bei dem jeweils zwei gegenüberliegende Ecken durch Radien ersetzt sind. Die Strukturbauteile 2a und 2b können identisch und in einer gemeinsamen Form herstellt werden, wobei die individuelle Anpassung der Grundform an die Flugzeugkabine dann durch Zuschnitt der flachen Seitenwände 8,9,10 und 11 erfolgt. Sofern die flachen Seitenwände 8 und 9 und 10 und 11 an den Strukturbauteilen 2a und 2b in einem rechten Winkel zueinander stehen, sollten die gegenüberliegenden flachen Seitenwände 8 und 11 und 9 und 10 jeweils paarweise die gleiche Breite aufweisen.

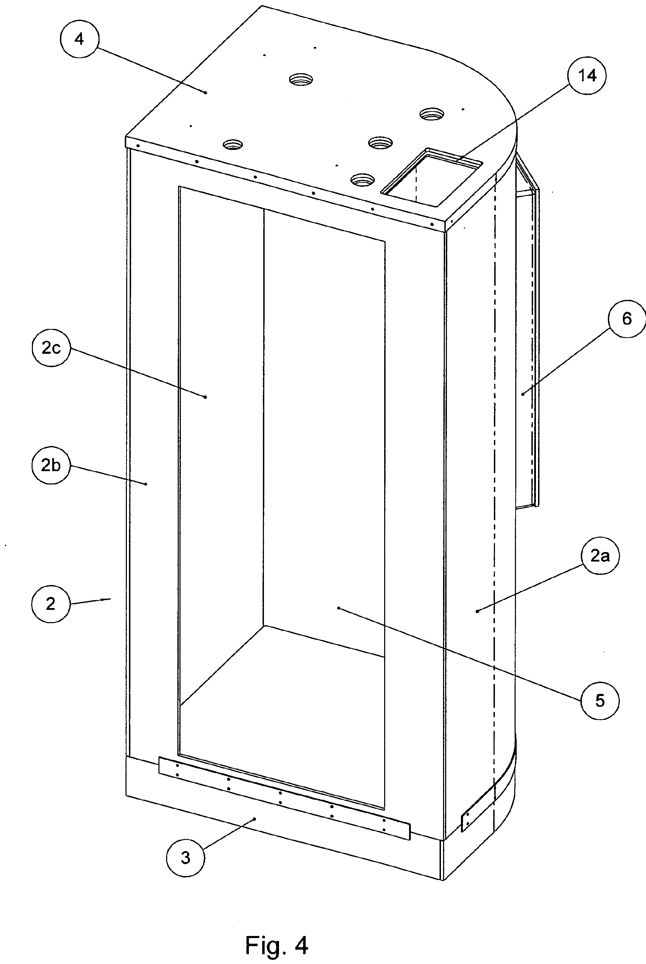

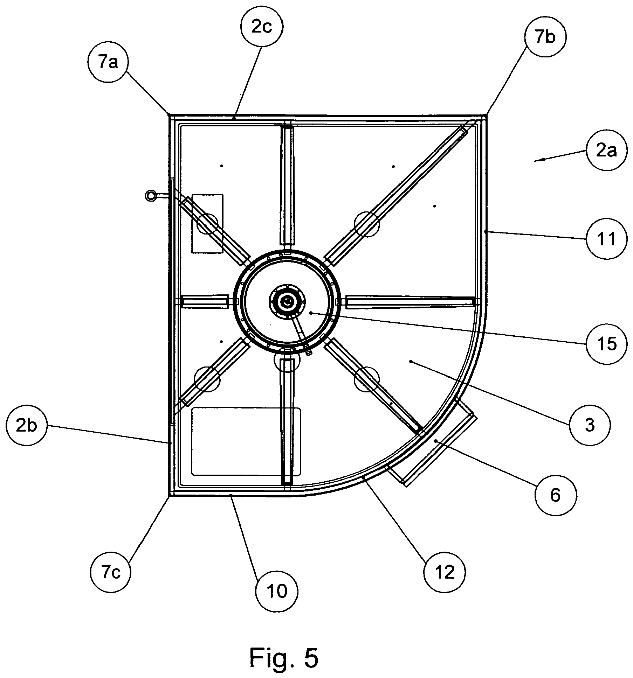

In den Figuren 4 und 5 ist ein weiteres Ausführungsbeispiel dargestellt, bei dem das Mittelteil 2 durch ein Strukturbauteil 2a mit einem Radius 12 und angrenzenden flachen Seitenwänden 10 und 11 und zwei flachen Strukturbauteilen 2b und 2c gebildet ist. Die flachen Strukturbauteile 2b und 2c sind an den vertikal verlaufenden Seiten des Strukturbauteiles 2a in den Kanten 7b und 7c mit diesem verbunden und selbst ebenfalls in einer vertikal verlaufenden Kante 7a miteinander verbunden. Die so geschaffene modulare Duschkabine besitzt dadurch einen rechteckigen oder quadratischen Grundriss mit einem eine Ecke ersetzenden Radius 12. In diesem Fall ist der den Einstiegsbereich bildende Ausschnitt 5 in dem flachen Strukturbauteil 2b angeordnet, so dass dieser mit einer ebenfalls flachen Tür verschlossen werden kann.

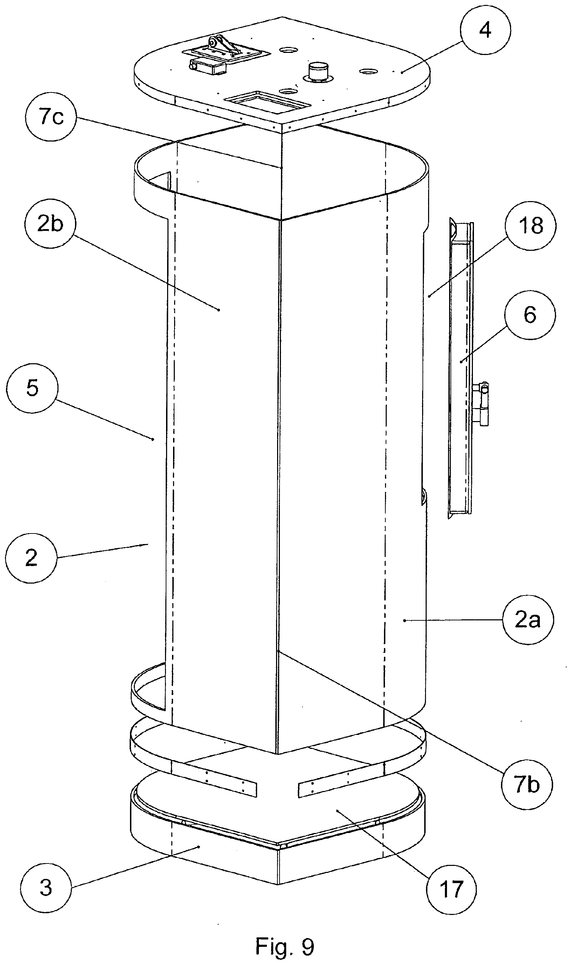

In Fig.9 ist der Aufbau einer erfindungsgemäßen modularen Duschkabine mit einer dem Ausführungsbeispiel aus Fig.2 entsprechenden Geometrie in Explosionsdarstellung zu erkennen. Die zu dem Mittelteil 2 zusammengefügten Strukturbauteile 2a und 2b weisen jeweils einen Radius auf, in dem die Ausschnitte 5 und 18 vorgesehen sind. Die Aufnahme 6 für die Armatureneinheit ist in dem Ausschnitt 18 seitlich an der Duschkabine angeordnet, so dass die Wasserzufuhr über die Armatureneinheit von der Innenseite der Duschkabine geregelt werden kann. Der Ausschnitt 5 dient als Einstiegsbereich und ist daher möglichst groß ausgeführt. Weder das Strukturbauteil 2a noch das Strukturbauteil 2b weisen eine horizontale, die Ausschnitte 5 und 18 schneidende Naht auf, die optisch verdeckt oder im Sinne eines hochwertigen optischen Erscheinungsbildes besonders sauber gearbeitet werden müsste. Da die vertikal verlaufenden Kanten 7b und 7c beim Einbau der Duschkabine im Flugzeug an die Wände der Flugzeugkabine stoßen, sind diese für den Betrachter nicht ausdrücklich als Verbindungsstellen zweier verschiedener Teile zu erkennen, sondern eher das Ergebnis der zu schaffenden Grundform, so dass das Mittelteil 2 gar nicht als zweiteilig wahrgenommen wird. An der Oberseite des Mittelteils 2 ist ein Deckenteil 4 vorgesehen, welches eine dem Grundriss der Duschkabine entsprechende Außengeometrie aufweist und von oben auf das Mittelteil 2 aufgesetzt oder nicht sichtbar in dieses eingelassen ist. In dem Deckenteil 4 sind verschiedene technische Einrichtungen, wie Beleuchtung, Entlüftung, Sauerstoffmasken, Überkopfduschkopf, Lautsprecher oder dergleichen, vorgesehen, durch welche der Aufenthalt in der Duschkabine entsprechend angenehm gestaltet werden kann bzw. welche aufgrund der speziellen Verwendung der Duschkabine im Flugzeug erforderlich sind. Nach unten schließt sich an das Mittelteil 2 ein Bodenteil 3 an, in dem ein Wasserablauf vorgesehen ist. Das Bodenteil 3 ist zusätzlich durch eine lösbare Abdeckplatte 17 abgedeckt, welche derart geformt ist, dass sich ein Ablaufspalt zwischen dem Mittelteil 2 und der Abdeckplatte 17 ergibt. Insgesamt ergibt sich durch den vorgeschlagenen Aufbau der Duschkabine eine Möglichkeit, die Duschkabine optisch höchsten Ansprüchen genügend zu gestalten. Außerdem kann durch entsprechende Bemessung und Platzierung der Ausschnitte die Nutzung der Duschkabine für den Fluggast möglichst angenehm gestaltet werden. Ferner kann eine in den Ausschnitt 5 einzusetzende Tür aufgrund der nicht mehr vorhandenen Nahtstelle wesentlich einfacher und wirksamer gedichtet werden.

Für den Fall, dass eine der technischen Einrichtungen in dem Deckenteil 4 oder der Ablauf in dem Bodenteil 3 defekt ist, kann die Reparatur sehr einfach durch Zugänglichmachen des Decken- oder Bodenteils 4 oder 3 erfolgen, ohne dass dazu die gesamte Duschkabine ausgebaut werden muss. Im Extremfall kann aus Zeitgründen auch das gesamte Bodenteil 3 oder Deckenteil 4 ersetzt werden, so dass eine Reparatur auch bei nur sehr kurzen Aufenthalten des Flugzeuges am Boden ermöglicht ist.

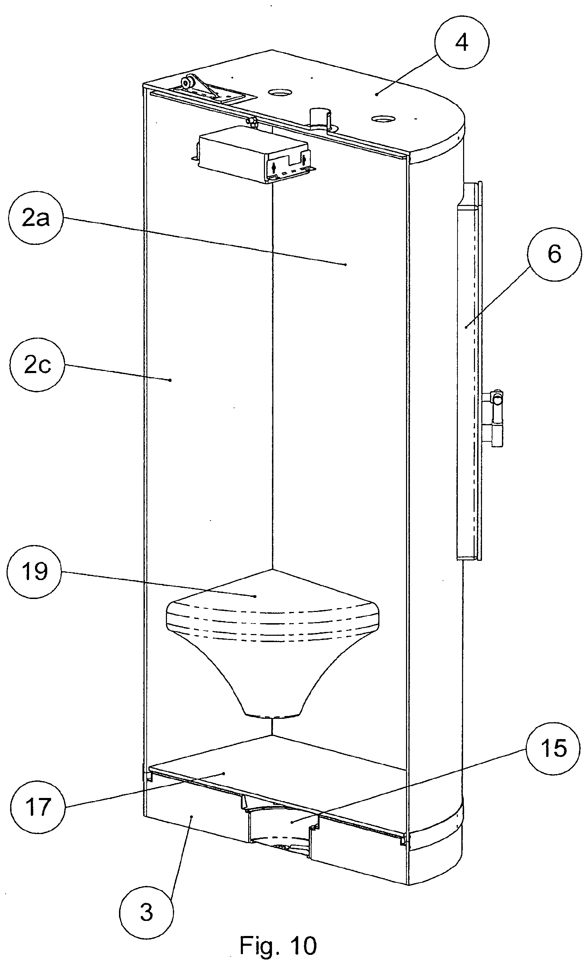

In Fig.10 ist eine weitere Ausführungsform der Erfindung zu erkennen, bei der zwischen den Strukturbauteilen 2c und 2a eine Sitzgelegenheit 19 vorgesehen ist. Die Sitzgelegenheit 19 kann als integraler Bestandteil eines der Strukturbauteile 2a oder 2c ausgebildet sein oder auch als zusätzliches Teil montiert werden. Neben seiner eigentlichen Funktion kann die Sitzgelegenheit zusätzlich dazu genutzt werden, um die Duschkabine zu versteifen. Ferner ist das Bodenteil 3 mit dem darin angeordneten Wasserablauf 15 zu erkennen, welches durch eine Abdeckplatte 17 abgedeckt ist. Die Außengeometrie der Abdeckplatte 17 entspricht dem maßstabsverkleinerten Grundriss der Duschkabine, so dass sich ein umlaufender Spalt konstanter Breite zwischen der Abdeckplatte 17 und dem Mittelteil 2 ergibt.

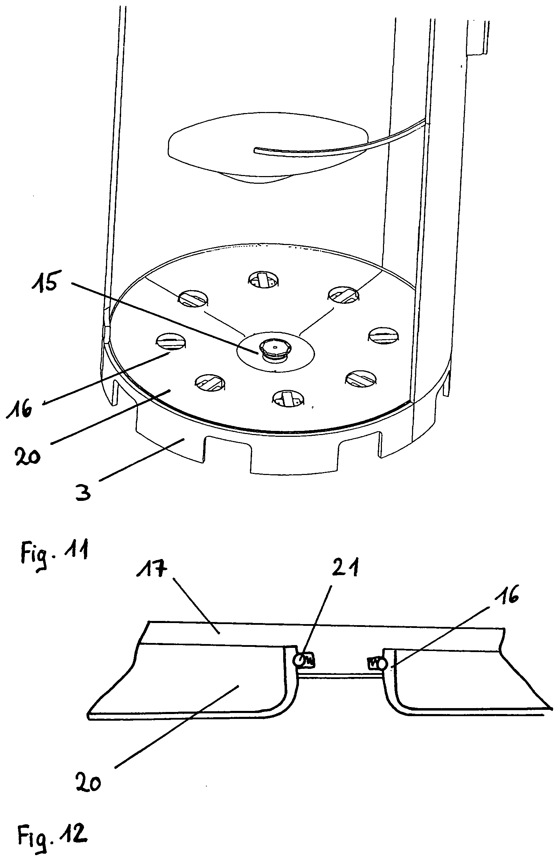

In der Fig.11 ist das Bodenteil 3 aus der Figur 1 ohne Abdeckplatte 17 dargestellt. Das Bodenteil 3 ist mit ringförmigen sich erhebenden Abstützelementen 16 versehen, auf denen die Abdeckplatte 17, wie auch in Fig.12 zu erkennen ist, aufliegt. Durch die Abstützelemente 16 wird verhindert, dass der Ablauf 15 oder andere technische Einrichtungen beim Begehen der Duschkabine belastet werden. Zusätzlich werden durch die Abstützelemente 16 Hohlräume 20 geschaffen, durch die das Wasser in den Ablauf 15 abfließen kann. Die Abdeckplatte 17 ist mit Rastverbindungen 21 an den Abstützelementen 16 befestigt, so dass diese ohne Werkzeuge montiert und demontiert werden kann. Die Form und Anordnung der Abstützelemente 16 kann selbstverständlich variiert werden, so dass sich insgesamt eine gute Unterstützung der Abdeckplatte 17 ergibt bzw. die Belastung der Abdeckplatte 17 beim Begehen der Duschkabine verteilt und damit die Maximalbelastung reduziert wird. Ferner kann die Anordnung und Formgebung der Abstützelemente 16 auch derart erfolgen, dass die in dem Bodenteil 3 angeordneten technischen Einrichtungen zugänglich sind und/oder entlastet werden.

## Patentansprüche

1. Modulare Duschkabine für Flugzeuge mit einer integrierbaren Armatureneinheit (6) und integrierten technischen Einrichtungen, wie z.B. einem Wasserablauf (15), einer Beleuchtung, einer Entlüftungsvorrichtung, Sauerstoffmasken oder dergleichen, wobei
- die Duschkabine ein Mittelteil (2) aufweist, in dem ein durch einen Ausschnitt (5) gebildeter Einstiegsbereich und eine Aufnahme für die Armatureneinheit (6) vorgesehen sind,
- und die Duschkabine ein sich oben an das Mittelteil (2) anschließendes Deckenteil (4) und ein sich unten an das Mittelteil (2) anschließendes Bodenteil (3) aufweist,
- und die technischen Einrichtungen dem Deckenteil (4) und/oder dem Bodenteil (3) zugeordnet sind, **dadurch gekennzeichnet, dass**
- das Mittelteil (2) durch wenigstens zwei Strukturbauteile (2a,2b,2c) gebildet ist, und die Strukturbauteile (2a,2b,2c) an ihren vertikal verlaufenden Seiten miteinander verbunden sind, wobei
- wenigstens eines der Strukturbauteile (2a,2b) einen Radius (12,13) aufweist, und das Strukturbauteil (2a,2b) im Anschluss an den Radius (12,13) in eine flache Seitenwand (8,9,10,11) übergeht, so dass durch den Radius (12,13) bei Einbau in eine Flugzeugkabine ein Freiraum zwischen der Duschkabine und aneinander grenzenden Seitenwänden der Flugzeugkabine geschaffen ist, in dem die Armatureneinheit (6) von außen an die Duschkabine angesetzt ist.

2. Modulare Duschkabine nach Anspruch 1, **dadurch gekennzeichnet, dass** wenigstens zwei Strukturbauteile (2a,2b) mit einem identischen Radius (12,13) vorgesehen sind, und die Strukturbauteile (2a,2b) derart zusammengefügt sind, dass die gegenüberliegenden flachen Seitenwände (8,9,10,11) parallel zueinander angeordnet sind.

3. Modulare Duschkabine nach Anspruch 2, **dadurch gekennzeichnet, dass** die aneinander angrenzenden flachen Seitenwände (8,10 und 9,11) unterschiedlich breit sind.

4. Modulare Duschkabine nach einem der vorangegangenen Ansprüche, **dadurch gekennzeichnet, dass** zwischen dem Mittelteil (2) und dem Deckenteil (4) wenigstens ein Entlüftungsspalt vorgesehen ist.

5. Modulare Duschkabine nach einem der vorangegangenen Ansprüche, **dadurch gekennzeichnet, dass** das Bodenteil (3) und/oder das Deckenteil (4) zum Innenraum der Duschkabine durch eine Abdeckplatte (17) abgedeckt sind.

6. Modulare Duschkabine nach Anspruch 5, **dadurch gekennzeichnet, dass** die Abdeckplatte (17) magnetisch befestigt ist.

7. Modulare Duschkabine nach einem der Ansprüche 5 oder 6, **dadurch gekennzeichnet, dass** zwischen der Abdeckplatte (17) und dem Bodenteil (3) Abstützelemente (16) vorgesehen sind, durch die die Abdeckplatte (17) von dem Bodenteil (3) in einem Abstand gehalten ist.

8. Modulare Duschkabine nach einem der Ansprüche 5 bis 7, **dadurch gekennzeichnet, dass** zwischen der Abdeckplatte (17) und dem Mittelteil (2) ein Wasserablaufspalt oder ein Entlüftungsspalt vorgesehen ist.

## Claims

1. Modular shower cabin for aircrafts comprising an integratable faucet unit (6) and integrated technical facilities, like for example a water drain (15), an illumination, a ventilation device, oxygen masks or the like, wherein
- the shower cabin comprises a center portion (2), in which an entrance area formed by a recess (5) and a mounting for the faucet unit (6) are provided,
- and the shower cabin comprises a ceiling portion (4) adjoining the center portion (2) at the top, and a bottom portion (3) adjoining the center portion (2) at the bottom,
- and the technical facilities are allocated to the ceiling portion (4) and/or to the bottom portion (3), **characterised in that**
- the center portion (2) is formed by at least two structural components (2a,2b,2c), and the structural components (2a,2b,2c) are connected with each other at their vertically running sides, wherein
- at least one of the structural components (2a,2b) has a radius (12,13), and the structural component (2a,2b) at the end of the radius (12,13) passes into a planar side wall (8,9,10,11), so that when installed in an aircraft a free space between the shower cabin and the side walls of an aircraft cabin adjacent to each other is provided by the radius (12,13), in which free space the faucet unit (6) can be attached to the shower cabin from the outside.

2. Modular shower cabin according to claim 1, **characterised in that** at least two structural components (2a,2b) having an identical radius (12,13) are provided, and the structural components (2a,2b) are joined together in such a way that the opposite planar side walls (8,9,10,11) are arranged to be parallel to each other.

3. Modular shower cabin according to claim 2, **characterised in that** the planar side walls (8,10 and 9,11) adjacent to each other have different widths.

4. Modular shower cabin according to any one of the preceding claims, **characterised in that** at least one ventilation gap is provided between the center portion (2) and the ceiling portion (4).

5. Modular shower cabin according to any one of the preceding claims, **characterised in that** the bottom portion (3) and/or the ceiling portion (4) are covered by a cover plate (17) towards the interior of the shower cabin.

6. Modular shower cabin according to claim 5, **characterised in that** the cover plate (17) is fastened magnetically.

7. Modular shower cabin according to one of the claims 5 or 6, **characterised in that** support elements (16) are provided between the cover plate (17) and the bottom portion (3), by which support elements (16) the cover plate (17) is held at a distance from the bottom portion (3).

8. Modular shower cabin according to one of the claims 5 to 7, **characterised in that** a water drain gap or a ventilation gap is provided between the cover plate (17) and the center portion (2).

## Revendications

1. Cabine de douche modulaire pour avions dotée d'une unité d'armature (6) intégrable et de dispositifs techniques intégrés, tels que par exemple une évacuation d'eau (15), un éclairage, un moyen de ventilation, des masques à oxygène ou similaires, dans laquelle
- la cabine de douche comporte une partie médiane (2), au sein de laquelle une zone d'entrée formée par une échancrure (5) et un accueil pour l'unité d'armature (6) sont prévus,
- et la cabine de douche comporte une partie de toit (4) se rattachant à la partie médiane (2) au-dessus et une partie de fond (3) se rattachant à la partie médiane (2) au-dessous,
- et les dispositifs techniques sont ordonné à la partie de toit (4) et/ou à la partie de fond (3), **caractérisée en ce que**
- la partie médiane (2) est formée par au moins deux composants structurels (2a, 2b, 2c), et les composants structurels (2a, 2b, 2c) sont reliés l'un à l'autre sur leurs côtés verticaux, dans laquelle
- au moins un des composants structurels (2a, 2b) possède un rayon (12, 13), et le composant structurel (2a, 2b) dépasse dans une paroi latérale plate (8, 9, 10, 11) après le rayon, de sorte que lors de l'installation dans une cabine d'avion le rayon (12, 13) crée un espace libre entre la cabine de douche et des parois latérales adjacentes l'une à l'autre de la cabine d'avion, à l'intérieur duquel l'unité d'armature (6) est fixée à la cabine de douche depuis l'extérieur.

2. Cabine de douche modulaire selon la revendication 1, **caractérisée en ce qu'**au moins deux composants structurels (2a, 2b) sont prévus avec un rayon (12, 13) identique, et les composants structurels (2a, 2b) sont assemblés de telle façon que les parois latérales plates (8, 9, 10, 11) opposées sont agencées parallèlement l'une à l'autre.

3. Cabine de douche modulaire selon la revendication 2, **caractérisée en ce que** les parois latérales plates (8, 10 et 9, 11) adjacentes l'une à l'autre sont de largeurs différentes.

4. Cabine de douche modulaire selon l'une des revendications précédentes, **caractérisée en ce qu'**au moins une fente de ventilation est prévue entre la partie médiane (2) et la partie de toit (4).

5. Cabine de douche modulaire selon l'une des revendications précédentes, **caractérisée en ce que** la partie de fond (3) et/ou la partie de toit (4) sont recouvertes par une plaque de couverture (17) pour former l'espace intérieur de la cabine de douche.

6. Cabine de douche modulaire selon la revendication 5, **caractérisée en ce que** la plaque de couverture (17) est fixée par aimantation.

7. Cabine de douche modulaire selon l'une des revendications 5 ou 6, **caractérisée en ce que** des éléments de soutien (16) sont prévus entre la plaque de couverture (17) et la partie de fond (3), par lesquels la plaque de couverture (17) est maintenue à distance de la partie de fond (3).

8. Cabine de douche modulaire selon l'une des revendications 5 à 7, **caractérisée en ce qu'**une fente d'évacuation d'eau ou une fente de ventilation est prévue entre la plaque de couverture (17) et la partie médiane (2).
